# FASCICULE DE BREVET EUROPEEN

(11) **EP 0 519 845 B1**
(45) Date de publication et mention de la délivrance du brevet: **30.07.1997**
(21) Numéro de dépôt: 92420205.4
(22) Date de dépôt: 16.06.1992
(51) Int. Cl.: B25B 28/00, B23D 15/14, B23D 29/00, A62B 3/00

(54) **Outil autonome polyvalent tel que cisaille/écarteur à commande hydraulique**
Autonomes Mehrzweckwerkzeug wie Schere/Spreizer mit hydraulischem Antrieb
Independant multi-purpose tool as schear/spreader with hydraulic control

(30) Priorité: 20.06.1991 FR 9107837
(43) Date de publication de la demande: 23.12.1992
(73) Titulaire: HYDR'AM, 69720 Saint Bonnet de Mure (FR)
(72) Inventeur: Armand, Michel, F-69330 Jonage (FR)
(74) Mandataire: Laurent, Michel

(56) Documents cités:
- EP-A- 0 235 403
- EP-A- 0 274 710
- EP-A- 0 389 716
- FR-A- 2 623 738
- FR-A- 2 644 383

## Description

La présente invention concerne les outils à commande hydraulique, comprenant deux organes actifs pouvant être écartés et rapprochés l'un de l'autre, tels que par exemple les cisailles ou systèmes écarteurs utilisés notamment pour réaliser le démantèlement d'installations, faire des découpes dans des tôles d'épaisseur appréciable, tels que par exemple dans des carrosseries d'un véhicule accidenté (automobile, car, train, avion..).

De telles cisailles ou écarteurs sont, comme cela ressort notamment du FR-A-2 623 738 ou EP-A-409 753, constitués de deux lames ou bras, articulés autour d'un axe commun et qui sont montés sur une chape solidaire du corps d'un vérin, l'ouverture et la fermeture desdites lames ou bras lors de l'opération de coupe ou d'écartement étant provoquées par l'intermédiaire d'un système à biellette commandé directement par la tige dudit vérin.

Actuellement, l'alimentation de tels outils est obtenue à partir d'une source indépendante, ce qui les rend inadaptés lorsque l'on souhaite les utiliser dans des zones d'accès difficile. Par ailleurs, de tels dispositifs sont en général conçus de manière à exercer leur action dans une direction déterminée, soit entre les deux organes actifs lors du rapprochement de ces derniers (cisailles), soit lors de l'éloignement l'un de l'autre des deux organes actifs (cas d'un écarteur).

Par suite, se pose depuis fort longtemps le problème de pouvoir réaliser de tels travaux au moyen d'un outil polyvalent, autonome.

Si de nombreuses propositions ont été faites à ce jour pour réaliser des outils comportant un moteur électrique alimenté par une batterie intégrée au corps de l'outil (perceuse, scie, couteau, voire même outil de sertissage) comme cela ressort notamment des documents suivants : EP-235 403, EP-389 716, FR-A-2 644 383 et EP-0 274 710 (ce dernier document correspondant à l'USP 4 890 474), toutes les solutions proposées ne permettent cependant pas d'avoir un ensemble pouvant fonctionner de manière réversible en ayant une grande efficacité dans les deux sens de travail.

Or on a trouvé, et c'est ce qui fait l'objet de la présente invention, un perfectionnement apporté à de tels outils autonomes dont l'organe actif est commandé par un moteur électrique alimenté par une batterie intégrée au corps de l'outil, et qui permet de résoudre ce problème, les deux lames ou bras constituant l'organe actif étant efficaces aussi bien lors du rapprochement des deux bras que lors de leur écartement, et qui permet d'utiliser ledit outil aussi bien comme une cisaille conventionnelle qu'en tant qu'écarteur.

D'une manière générale, l'invention concerne un outil autonome polyvalent à commande hydraulique se présentant sous la forme d'un ensemble comportant un vérin hydraulique dont la tige actionne un outil proprement dit constitué de deux lames ou bras articulées autour d'un axe commun , et qui sont montées sur une chape solidaire du corps du vérin, l'ouverture et la fermeture desdites lames étant provoquées au moyen d'un système à biellettes commandé directement par la tige du vérin, et ce par l'intermédiaire d'un fluide comprimé pouvant être distribué à l'intérieur d'un circuit de fluide réversible permettant d'agir sur les deux faces du piston pour fermer et écarter les lames, caractérisé en ce que la commande de rapprochement et d'écartement desdites lames est obtenue par l'intermédiaire d'un ensemble intégré dans le corps de l'outil, ledit ensemble comprenant un moteur électrique alimenté par une batterie, et qui entraîne des moyens permettant de comprimer un fluide contenu à l'intérieur d'une chambre étanche, une membrane souple étant disposée dans ladite chambre pour compenser les différences de volume de fluide à l'intérieur de cette chambre et éviter la formation d'une dépression lors des déplacements dudit fluide pour actionner l'outil, ledit fluide comprimé étant transféré par l'intermédiaire d'un ensemble distributeur et répartiteur à l'intérieur d'un circuit réversible lui permettant d'agir indifféremment sur les deux faces du piston commandant la tige du vérin actionnant les deux lames ou bras formant l'outil, ce qui permet d'avoir un ensemble fonctionnant de manière réversible et de manière efficace dans les deux sens de travail (ouverture et fermeture des lames).

Selon une forme préférentielle de réalisation conforme à l'invention :
- l'ensemble répartiteur est constitué par un boitier coulissant comportant des circuits permettant de transférer le fluide sous pression provenant au travers d'un conduit axial relié à la pompe, soit au travers d'un conduit d'alimentation permettant d'agir contre la face du piston afin de le repousser, ce qui entraîne la fermeture des organes actifs, soit au travers d'un conduit débouchant au regard d'un canal coaxial à l'axe du piston, ce qui permet alors d'agir sur la face dudit piston tendant alors à écarter les deux éléments actifs l'un de l'autre ;
- le moteur d'entraînement est disposé dans l'axe du vérin hydraulique commandant les lames de l'outil, la batterie d'alimentation étant, quant à elle, disposée latéralement par rapport aux organes précités, ce qui permet d'obtenir un ensemble parfaitement équilibré.

L'invention et les avantages qu'elle apporte seront cependant mieux compris grâce à l'exemple de réalisation donné ci-après et qui concerne un ensemble mixte cisaille/écarteur réalisé conformément à l'invention et qui est illustré par les schémas annexés dans lesquels :
- la figure 1 illustre la position de l'élément actif agissant en tant que cisaille (position fermée) et ;
- la figure 2 est une vue similaire illustrant la position de l'élément actif en position ouverte (fonction écarteur) ;
- les figures 3 et 4 sont des vues agrandies montrant plus en détail la manière dont est réalisée la commande hydraulique permettant d'obtenir les positions respectives de l'outil représenté aux figures 1 et 2.

Si l'on se reporte aux schémas annexés, l'outil autonome, polyvalent, permettant une utilisation aussi bien en tant que cisaille qu'en tant qu'écarteur, se présente sous la forme d'un ensemble comportant un vérin hydraulique, désigné par la référence générale (1), dont la tige (2) actionne l'outil (3) proprement dit, constitué essentiellement de deux lames ou bras (3a,3b), articulés autour d'un axe commun (4) et montés sur une chape (5) solidaire du corps du vérin, l'ouverture et la fermeture desdites lames (3a,3b) étant provoquées par l'intermédiaire d'un système à biellettes (6a,6b) commandé directement par la tige (2) du vérin (1).

Conformément à l'invention, et ainsi que cela ressort des figures annexées, la commande de l'ouverture et de la fermeture des lames (3a,3b) est obtenue par l'intermédiaire d'un ensemble, désigné par la référence générale (2), et qui est monté directement sur le corps du vérin (1) et qui permet, comme cela sera vu dans la suite de la description, de déplacer indifféremment dans un sens ou dans l'autre le piston du vérin pour commander l'écartement et le rapprochement des lames (3a,3b). Pour ce faire, ledit ensemble est constitué essentiellement par un moteur électrique (7) alimenté par une batterie (8) intégrée dans le boitier de l'outil. On utilisera par exemple un moteur douze volts alimenté en courant continu. L'arbre de sortie de ce moteur (7) (associé ou non à un réducteur) permet de commander des moyens permettant d'assurer la compression d'un fluide sous pression disposé dans une chambre étanche (9). Un système répartiteur (10) est associé aux éléments précités pour alimenter un circuit réversible permettant de faire agir ledit fluide sous pression indifféremment sur les deux faces (11a) ou (11b) du piston (11) du vérin (1).

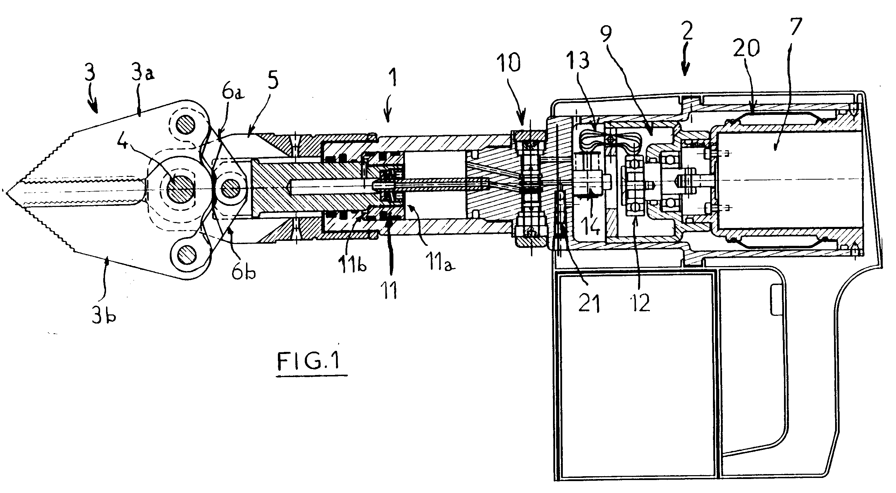

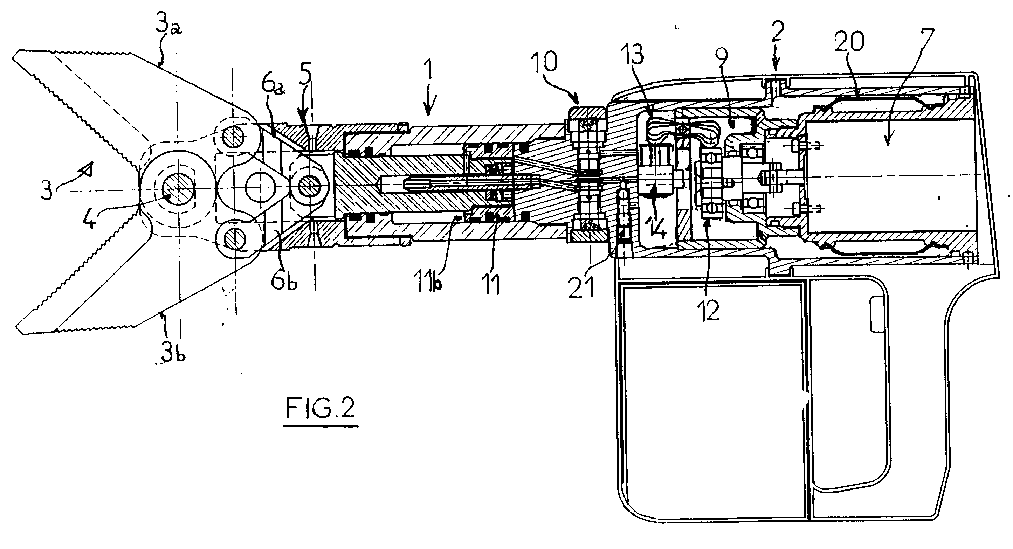

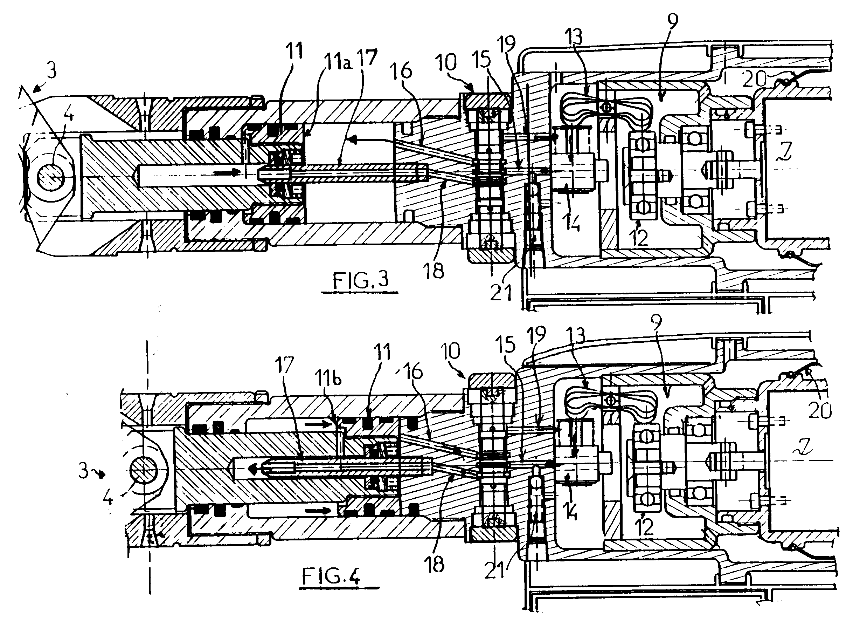

L'ensemble de compression du fluide est constitué essentiellement par un excentrique (12) entraîné directement par l'arbre de sortie du moteur (7) excentrique qui commande un élément basculeur (13) qui agit sur une pompe (14) permettant d'envoyer le fluide sous pression dans un conduit axial central (15). En regard de la sortie de ce conduit d'alimentation (15), est disposé l'ensemble distributeur et répartiteur proprement dit (10). Un tel ensemble répartiteur est constitué par un boitier coulissant comportant des circuits permettant de transférer le fluide sous pression provenant au travers d'un conduit axial (15) relié à ladite pompe (14), soit au travers d'un conduit d'alimentation (16) permettant d'agir contre la face (11a) du piston (11), afin de le repousser (position représentée aux figures 1 et 3), ce qui entraîne la fermeture des organes actifs (3) soit, au travers d'un conduit (18) débouchant au regard d'un canal coaxial (17) à l'axe du piston, et qui permet d'agir alors sur la face (11b) dudit piston (11) (position représentée à la figure 4) tendant alors à écarter les deux éléments actifs (3a,3b) l'un de l'autre (figure 2).

Par ailleurs, afin de compenser les différences de volume de fluide à l'intérieur de la chambre, une membrane souple (20) est disposée dans ladite chambre et permet donc d'éviter la formation d'une dépression lors des déplacements du fluide pour actionner l'outil. Enfin, un limiteur de pression (21) est associé au conduit axial (15) et assure une sécurité totale de fonctionnement de l'ensemble.

Dans le premier mode d'action (figures 1 et 3), le retour du fluide qui était contenu à l'intérieur de la chambre du piston, s'effectue au travers du conduit axial (17), du conduit (18) et d'un conduit (19) de retour débouchant à l'intérieur de la chambre (9). Dans le deuxième cas (action de l'outil en position écartée (figures 2 et 4), le retour du fluide contenu à l'intérieur de la chambre du piston s'effectue au travers du conduit (16) et du conduit de retour (19) à l'intérieur de la chambre (9). On obtient ainsi un circuit de commande parfaitement réversible et permettant d'avoir des actions d'intensité élevée tant lors de l'écartement que du rapprochement des lames constituant la partie active de l'outil.

Ainsi que cela ressort des figures annexées, de façon préférentielle, le moteur d'entraînement (7) (éventuellement associé à un réducteur), est aligné avec l'axe du vérin hydraulique commandant les lames de l'outil, la batterie d'alimentation étant, quant à elle, disposée latéralement par rapport à l'ensemble précité, permettant ainsi d'obtenir un outil compact, équilibré. Par ailleurs, si pour assurer la compression du fluide, on utilise un système à levier basculant (13) ayant deux bras de longueur égale, il pourrait être envisagé d'obtenir une démultiplication en décalant l'axe de pivotement dudit levier (13) par rapport à sa longueur.

Un tel ensemble qui est de conception particulièrement simple, présente une grande efficacité et permet d'obtenir une action parfaitement réversible de l'outil (3) permettant son utilisation aussi bien en tant que cisaille (figures 1 et 2) qu'en tant qu'écarteur (figures 2 et 4).

Il est particulièrement adapté pour réaliser des outils portables permettant d'intervenir sur n'importe quel site.

## Revendications

1. Outil autonome polyvalent à commande hydraulique se présentant sous la forme d'un ensemble comportant un vérin hydraulique (1) dont la tige actionne un outil proprement dit constitué de deux lames ou bras (3a,3b) articulées autour d'un axe commun , et qui sont montées sur une chape solidaire du corps du vérin (1), l'ouverture et la fermeture desdites lames étant provoquées au moyen d'un système à biellettes commandé directement par la tige du vérin, et ce par l'intermédiaire d'un fluide comprimé pouvant être distribué à l'intérieur d'un circuit de fluide réversible permettant d'agir sur les deux faces du piston pour fermer et écarter les lames, caractérisé en ce que la commande de rapprochement et d'écartement desdites lames (3a,3b) est obtenue par l'intermédiaire d'un ensemble intégré dans le corps de l'outil, ledit ensemble comprenant un moteur électrique (7) alimenté par une batterie (8), et qui entraîne des moyens (12,13,14) permettant de comprimer un fluide contenu à l'intérieur d'une chambre étanche (9), une membrane souple (20) étant disposée dans ladite chambre (9) pour compenser les différences de volume de fluide à l'intérieur de cette chambre et éviter la formation d'une dépression lors des déplacements dudit fluide pour actionner l'outil, ledit fluide comprimé étant transféré par l'intermédiaire d'un ensemble distributeur et répartiteur (10) à l'intérieur d'un circuit réversible (15,16,17,18,19) lui permettant d'agir indifféremment sur les deux faces (11a,11b) du piston (11) commandant la tige du vérin actionnant les deux lames ou bras (3a,3b) formant l'outil (3), ce qui permet d'avoir un ensemble fonctionnant de manière réversible et de manière efficace dans les deux sens de travail (ouverture et fermeture des lames).

2. Outil autonome polyvalent selon la revendication 1, caractérisé en ce que l'ensemble répartiteur est constitué par un boitier coulissant comportant des circuits permettant de transférer le fluide sous pression provenant au travers d'un conduit axial (15) relié à la pompe (14), soit au travers d'un conduit d'alimentation (16) permettant d'agir contre la face (11a) du piston afin de le repousser, ce qui entraîne la fermeture des organes actifs (3), soit au travers d'un conduit (18) débouchant au regard d'un canal coaxial (17) à l'axe du piston, ce qui permet alors d'agir sur la face (11b) dudit piston (11) tendant alors à écarter les deux éléments actifs (3a,3b) l'un de l'autre.

3. Outil autonome polyvalent selon l'une des revendications 1 et 2, caractérisé en ce que le moteur d'entraînement (7) est disposé dans l'axe du vérin hydraulique commandant les lames de l'outil, la batterie d'alimentation (8) étant, quant à elle, disposée latéralement par rapport aux organes précités, ce qui permet d'obtenir un ensemble parfaitement équilibré.

## Claims

1. Hydraulically controlled self-contained multifunctional tool in the form of an assembly comprising a hydraulic ram (1) whose rod activates an actual tool constituted by two blades (or arms) (3a,3b) which are articulated about a common pin and which are mounted on a fork joint which is securely fixed to the body of the ram (1), the opening and closing of the said blades being brought about by means of a system of links controlled directly by the rod of the ram and that by means of a compressed fluid transferred with a reversible circuit allowing it to act on the two faces of the piston to open and to close the blades, **characterised** in that the control of the bringing together and the moving apart of the said blades (3a,3b) is obtained by means of an assembly which is integrated into the body of the tool, the said assembly comprising an electric motor (7) powered by a battery (8), and which drives means (12,13,14) allowing the compressing of a fluid contained within a leaktight chamber (9), a flexible membrane (20) being arranged in the said chamber (9) in order to compensate for differences in the volume of the fluid within this chamber and to avoid the formation of a vacuum when the said fluid is moved in order to activate the tool, the said compressed fluid being transferred by means of a directional control valve and feeder assembly (10) within a reversible circuit (15,16,17,18,19) allowing it to act indifferently on the two faces (11a,11b) of the piston (11) controlling the rod of the ram activating the two blades or arms (3a,3b) forming the tool (3), which permits having an assembly operating in a reversible manner and efficiency in both working directions (opening and closing of the blades).

2. Self-contained multifunctional tool according to claim 1, characterised in that the feeder assembly is constituted by a sliding casing comprising circuits permitting the transfer of the fluid under pressure coming through axial duct (15) connected to the pump(14), either through a supply duct (16) allowing action against the face (11a) of the piston in order to push it back, which results in the closing of the active members (3), or through a duct (18) opening opposite a channel (17) which is coaxial with the axis of the piston, which thus permits action on the face (11b) of the said piston (11), tending thus to move the two active elements (3a,3b) apart from one another.

3. Self-contained multifunctional tool according to either of claims 1 and 2, characterised in that the drive motor (7) is arranged in the axis of the hydraulic ram controlling the blades of the tool, the power battery (8) being, itself, arranged laterally with respect to the aforementioned members, which allows a perfectly balanced assembly to be obtained.

## Patentansprüche

1. Selbständiges Mehrzweck-Werkzeug mit hydraulischem Antrieb, das sich in Form einer Anordnung darstellt, die einen Hydraulikzylinder (1) aufweist, dessen Hubstange ein eigentliches Werkzeug betätigt, das aus zwei Schneiden oder Armen (3a, 3b) gebildet ist, die um eine gemeinsame Achse verschwenkbar sind, und die auf einer mit dem Körper des Zylinders (1) fest verbundenen Abdeckung befestigt sind, wobei das Öffnen und Schließen der Schneiden mittels eines Schwingarmsystems bewirkt wird, das unmittelbar durch die Hubstange des Zylinders betätigt wird, und zwar mittels eines komprimierten Fluids, das in das Innere eines umkehrbaren Fluidleitungsweges geleitet werden kann, wodurch das Fluid auf die beiden Seiten des Kolbens wirken kann, um die Schneiden zu schließen oder zu spreizen, dadurch gekennzeichnet, daß die Betätigung zum Zusammenbringen oder Spreizen der Schneiden (3a, 3b) mittels einer in dem Körper des Werkzeuges integrierten Anordnung bewirkt wird, wobei die Anordnung einen Elektromotor (7) aufweist, der über eine Batterie versorgt wird, und der Mittel (12, 13, 14) antreibt, mit denen ein im Inneren einer dichten Kammer (9) enthaltenes Fluid komprimiert werden kann, wobei in der Kammer (9) eine biegsame Scheidewand (20) angeordnet ist, um die Volumendifferenzen des Fluids im Inneren der Kammer auszugleichen und während der Fließbewegungen des Fluids zur Betätigung des Werkzeuges die Bildung eines Unterdruckes zu vermeiden, wobei das komprimierte Fluid mittels einer Zuleitungs- und Verteilungsanordnung (10) in das Innere eines umkehrbaren Leitungsweges (15, 16, 17, 18, 19) geleitet wird, wodurch das Fluid in gleicher Weise auf die beiden Seiten (11a, 11b) des Kolbens (11) wirken kann, der die Hubstange des Zylinders betätigt, die die beiden das Werkzeug bildenden Schneiden oder Arme (3a, 3b) betätigt, wodurch eine Anordnung erhalten wird, die auf umkehrbare und wirkungsvolle Weise in beiden Arbeitsrichtungen (Öffnen und Schließen der Schneiden) funktioniert.

2. Selbstständiges Mehrzweck-Werkzeug nach Anspruch 1, dadurch gekennzeichnet, daß die Verteilungsanordnung aus einem verschiebbaren Gehäuse gebildet ist, das Leitungswege aufweist, die es ermöglichen, das durch einen mit der Pumpe (14) verbundenen axialen Kanal (15) hindurchtretende Fluid unter Druck entweder durch einen Zuführkanal (16) hindurch zu leiten, so daß das Fluid gegen die Seite (11a) des Kolbens wirken kann, um diesen wegzudrücken, wodurch das Schließen der Funktionselemente bewirkt wird, oder durch einen Kanal (18) hindurch zu leiten, der in einen zur Achse des Kolbens koaxialen Kanal (17) mündet, so daß das Fluid dann auf die Seite (11b) des Kolbens (11) wirken kann, der dann die beiden Funktionselemente (3a, 3b) gegenseitig spreizt.

3. Selbständiges Mehrzweck-Werkzeug nach Anspruch 1 oder 2, dadurch gekennzeichnet, daß der Antriebsmotor (7) in der Achse des Hydraulikzylinders angeordnet ist, der die Schneiden des Werkzeuges betätigt, wobei die Versorgungsbatterie (8) ihrerseits bezüglich der vorgenannten Elemente seitlich angeordnet ist, wodurch eine vollkommen im Gleichgewicht gehaltene Anordnung erhalten werden kann.
